Europäisches Patentamt

European Patent Office

Office européen des brevets

(11) Veröffentlichungsnummer: **0 033 866**
A2

# EUROPÄISCHE PATENTANMELDUNG

(21) Anmeldenummer: 81100386.2

(22) Anmeldetag: 20.01.81

(51) Int. Cl.³: **A 01 D 87/08**, A 01 F 25/20, E 02 F 3/81

(30) Priorität: 06.02.80 DE 3004231
25.08.80 DE 3031948

(43) Veröffentlichungstag der Anmeldung: 19.08.81
Patentblatt 81/33

(84) Benannte Vertragsstaaten: **AT BE CH FR GB LI NL**

(71) Anmelder: **Kock & Sohn, D-4441 Hopsten Ortsteil Schale (DE)**

(72) Erfinder: **Nubbemeyer, Heinrich, Emskamp 10, D-4557 Fürstenau (DE)**

(74) Vertreter: **Habbel, Hans-Georg, Dipl.-Ing., Postfach 3429 Am Kanonengraben 11, D-4400 Münster (DE)**

(54) Siloentnahmegerät für landwirtschaftliche Betriebe.

(57) Es wird ein Siloentnahmegerät für landwirtschaftliche Betriebe vorgeschlagen, bei dem die bei landwirtschaftlichen Fahrzeugen übliche Hubeinrichtung eine mit einem Greifer ausgerüstete Gabel betätigt, wobei das erforderliche Zusammenspiel zwischen Gabel und Greifer ohne zusätzliche hydraulische oder motorische Einrichtungen ermöglicht wird.

- 1 -

Siloentnahmegerät für landwirtschaftliche Betriebe

Die Erfindung betrifft ein Siloentnahmegerät für landwirtschaftliche Betriebe mit einer von Tragarmen einer von einem landwirtschaftlichen Zugfahrzeug getragenen Hubeinrichtung schwenkbar getragenen Gabel und einem um ein Schwenklager schwenkbaren Greifer, der mit der Gabel zusammenwirkt.

Aus der DE-OS 26 o8 769 ist eine Einrichtung gemäß dem Gattungsbegriff bekanntgeworden. Bei der bekannten Einrichtung schließt an die Hubeinrichtung, beispielsweise die Heckhydraulik eines landwirtschaftlichen Zugfahrzeuges, ein Träger schwenkbar an, der auf- und abbeweglich eine Gabel mit Gabelzinken trägt. Weiterhin trägt der Träger schwenkbar einen Greifer, der mit der Gabel zusammenwirken kann, indem er auf die Gabel zu bewegbar ist. Der Greifer besteht aus drei Seitenwandungen, die schneidmesserartig ausgebildet sind.

Diese Wandungen schneiden bei der Bewegung des Greifers auf die eigentliche Gabel zu in das Silagegut ein und trennen dadurch einen Block aus dem Silagevorrat aus. Gleichzeitig hält der Greifer in Zusammenwirkung mit der Gabel diesen ausgeschnittenen Block fest. Die Bewegung des Greifers auf die Gabel zu erfolgt durch eine gesonderte hydraulische Betätigungsvorrichtung, die an dem Träger einerseits und an dem Greifer andererseits gelagert ist.

Diese bekannte Einrichtung stellt ein Spezialgerät dar, das ausschließlich zur Silageentnahme benutzbar ist und damit einen relativ hohen Investitionsaufwand erfordert, da dann, wenn eine Silageentnahme nicht erforderlich ist, dieses Gerät nicht weiter einsetzbar ist.

Der Erfindung liegt die Aufgabe zugrunde, die in Verbindung mit landwirtschaftlichen Zugfahrzeugen üblicherweise über eine Hubeinrichtung schwenkbar getragene Gabel auch für die Silageentnahme auszurüsten, wobei das erforderliche Zusammenspiel zwischen Gabel und Greifer ohne zusätzliche hydraulische oder motorische Einrichtungen möglich sein soll.

Diese der Erfindung zugrundeliegende Aufgabe wird durch die in den Ansprüchen genannte Maßnahme gelöst. Gemäß dem Hauptanspruch wird dabei so vorgegangen, daß an die an sich bekannte Gabel Lenker anschließen, die die Gabel mit den Tragarmen der Hubeinrichtung verbinden und daß weiterhin Verbindungshebel vorgesehen werden, die mit dem Greifer verbunden werden, derart, daß ein Parallelogramm oder Lenkerviereck geschaffen wird, welches durch die Hubbewegung der Tragarme betätigt wird und dabei dafür Sorge trägt, daß bei der Hubbewegung der Greifer sich der Gabel nähert und dadurch das Ausschneiden und festhalten des Silageblockes bewirkt.

Gegenüber dem Stand der Technik wird also keine gesonderte Antriebsvorrichtung für den eigentlichen Greifer benötigt, sondern die Bewegungen, die der Greifer ausführen muß, werden von der die Gabel tragenden Hubeinrichtung zwangsläufig herbeigeführt.

Vorteilhafte Ausgestaltungen der erfindungsgemäßen Einrichtung  sind in den Unteransprüchen definiert.

Ein Ausführungsbeispiel der neuen Einrichtung wird nachfolgend anhand der Zeichnungen erläutert. Die Zeichnungen zeigen dabei in

Fig. 1          schaubildich das neue Siloentnahmegerät, in

Fig. 2    schematisch die Stellung des neuen Gerätes, in der die Verbindung zwischen Lenker und Hubeinrichtung in ihrer äußersten Knickstellung steht, und zwar in einer Seitenansicht, in

Fig. 3    schematisch die Anordnung bei geschlossenem Greifer und in

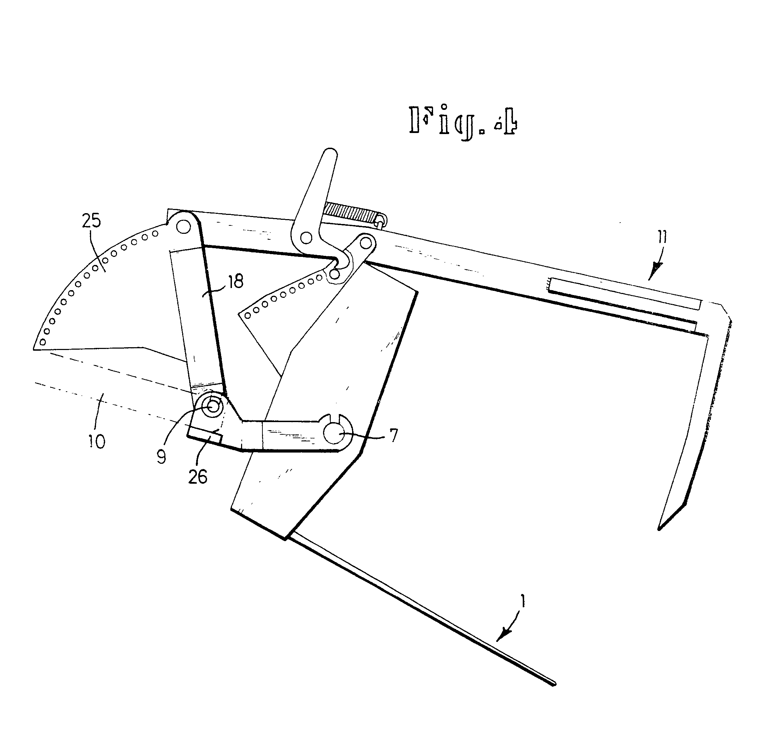

Fig. 4    ebenfalls schematisch in Seitenansicht die Anordnung gemäß Fig. 3 aber bei gelöster Verbindung zwischen Segmentplatte und Hubeinrichtung.

In den Zeichnungen ist mit 1 eine in landwirtschaftlichen Betrieben an sich bekannte, beispielsweise an Tragarme 1o einer Frontladerschwinge anschließbare Gabel bezeichnet, die Gabelzinken 2 aufweist und mit einer in dem dargestellten Ausführungsbeispiel als geschlossene Rückwand ausgebildeten Rückwand 3 ausgerüstet ist. Zur üblichen Verwendung trägt die Rückwand 3 eine Lochsegmentplatte 4, die normalerweise dem Anschluß des Gerätes an einen entsprechenden Fixierungspunkt, z.B. den Tragarmen 1o einer Frontladerschwinge, dient. Bei der erfindungsgemäßen Ausführungsform ist eine zusätzliche Segmentplatte 25 vorgesehen, die dieser Fixierung dient, wobei die Fixierung zwischen Frontladerschwinge und dem eigentlichen Siloentnahmegegerät in den Zeichnungen nicht besonders dargestellt ist.

Die Tragarme 1o der Frontladerschwinge, die auch als Hubeinrichtung zu bezeichnen ist, da sie in gleicher Weise auch für die Dreipunkthydraulik gilt, schließen unter Zwischenschaltung von Lenkern 5 und 6 an das Siloentnahmegerät an, wobei die Lenker 5 und 6 gelenkig bei 7 an der Rückwand 3 der Gabel 1 gelagert sind. Die Gelenkpunkte, an denen die Tragarme 1o an die Lenker 5 und 6 angreifen, sind mit 9 bezeichnet, wobei kurze Gelenkzapfen erkennbar sind.

An der Oberseite der Rückwand 3 ist schwenkbar ein Greifer 11 gelagert. Das Schwenklager ist mit 12 bezeichnet und durch dieses Schwenklager 12 wird der eigentliche Greiferstiel 17 in ein vorderes und hubeinrichtungsseitiges Ende unterteilt, wobei das hubeinrichtungsseitige Ende des Greiferstiels 17 mit 14 bezeichnet ist, während der Greifer am vorderen Ende die eigentlichen Greiferzinken 155 trägt. Diese Greiferzinken 155 sind nach unten gerade ausgebildet und schaffen mit einem an ihrem oberen Ende angeordneten und zum Gabelstiel 17 verlaufenden Widerlagerrahmen 27 ein Greiforgan, das in der Lage ist, den ergriffenen Silageballen oder -block sicher und fest zu halten.

Zusätzlich zu den Gabelzinken 2 trägt die Rückwand 3 noch Seitenwandzinken 233, die ebenfalls der sicheren Aufnahme des Silageblockes durch das Siloentnahmegerät dienen.

Das hubeinrichtungsseitige Ende 14 des Gabelstiels 17 schließt gelenkig an Verbindungshebel 18 und 19 an, die sich nach unten erstrecken und im Bereich der Gelenkzapfen 9 enden. Diese Verbindungshebel 18 und 19 sind dabei schwenkbar an ihren beiden Enden auf den zugeordneten Bauteilen gelagert, so daß sie entsprechende Bewegungen ausführen können. Es ist erkennbar, daß auf diese Weise durch das Gabelstielteil 14, das Schwenklager 12, die Verbindungshebel 18 und 19, die Lenker 5 und 6 und die Rückwand 3 sowie die Gelenkpunkte 7 ein Lenkerviereck geschaffen wird, das Bewegungen der sich hieran anschließenden Bauteile gegeneinander ermöglichen.

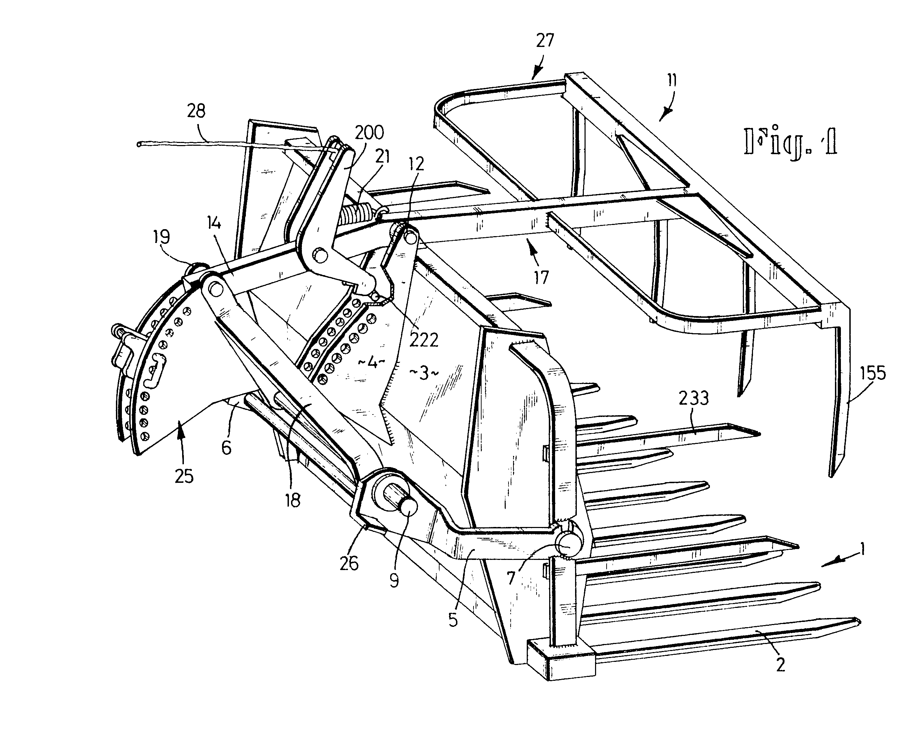

Der eigentliche Greifer 11 trägt schwenkbar einen Riegelhaken 2oo, der durch eine Wendelfeder 21 in die in Fig. 1 dargestellte Stellung gezwungen wird und der mit einem Riegelbolzen 222 in Kontakt gebracht werden kann, so daß dadurch der Greifer 11 in einer seiner Endstellungen, und zwar in der geöffneten Stellung, verriegelt werden kann. Hierdurch erfolgt gleichzeitig eine Blockierung des erläuterten Gelenkviereckes, so daß damit theoretisch der Greifer in eine Ruhelage gelangt und die eigentliche Gabel 1 in der bisher üblichen Weise betätigt werden kann, wobei dann die Segmentplatte 25 an der hierfür in an sich bekannter Weise an der Gabelschwinge vorgesehenen Verriegelungseinrichtung befestigt und festgelegt ist.

Die Wirkungsweise der neuen Einrichtung ist wie folgt: In der Ausgangslage ist der Greifer 11 durch das Zusammenwirken von Riegelhaken 2oo und Riegelbolzen 222 an der Rückwand 3 in der offenen Stellung arretiert, wobei durch eine entsprechende Zugvorrichtung 28 diese Verriegelung gelöst werden kann. In dieser offenen Stellung werden die Gabelzinken 2 in den aufzunehmenden Silagehaufen eingefahren und dann die Tragarme 1o angehoben, nachdem der Riegelhaken 2oo vom Riegelbolzen 222 gelöst ist. Durch die Hubbewegung der Tragarme 1o bewegen sich die Lenker 5 und 6 um das Drehlager 7 und die Verbindungshebel 18 und 19 stoßen das Gabelstielendteil 14 nach oben, so daß der Greifer 11 und die Greiferzinken 155 eine Bewegung nach unten ausführen müssen, da sich der Greifer um den Drehpunkt 12 dreht bzw. zwangsläufig durch die Bewegung des oben erläuterten Vierecks geschwenkt wird. Da die Bewegung nach oben unter Ausnutzen der hydraulischen Einrichtung des landwirtschaftlichen Arbeitsgerätes - aber ohne zusätzliche Hilfsmittel - erfolgt, steht der erforderliche Druck zur Verfügung und die Greiferzinken 155 können sich in den Silageblock einpressen und halten nunmehr diesen Silageblock in Verbindung mit den Gabelzinken 2 und den Seitenwandzinken 233 fest.

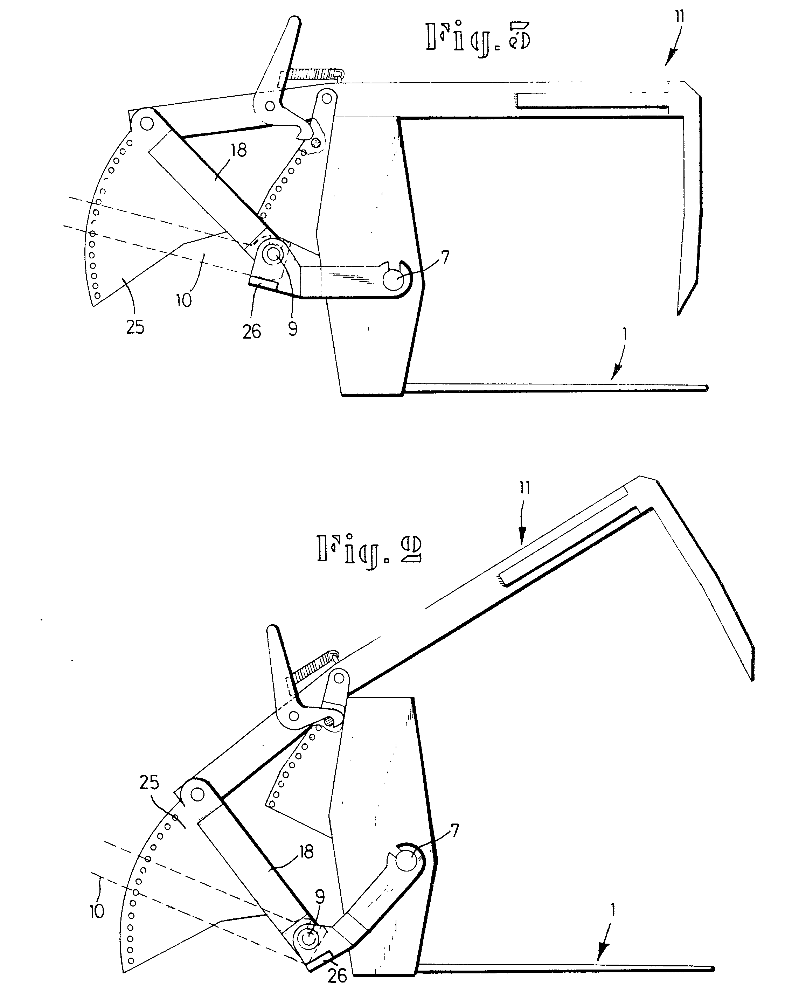

Wird nunmehr die Hubeinrichtung weiter betätigt und angehoben, kommt die Verstarrung zwischen Lenker 5 und 6 sowie den Tragarmen 1o zur Geltung, indem sich nämlich die Anschläge 26, die am Ende der Lenker 5 und 6 angeordnet sind, an die Unterseite der Tragarme 1o anlegen, so daß eine Schwenkbewegung der Tragarme weiter gegenüber den Lenkern 5 und 6 als dies in Fig. 3 dargestellt ist nicht möglich ist, d.h. in der in Fig. 3 dargestellten Stellung erfolgt eine Verstarrung der Schwenkbewegung zwischen den Tragarmen 1o und den Lenkern 5 bzw. 6.

Es ist nun möglich, die eigentliche Gabel 1 insgesamt hochzuheben. Wird dann die Verriegelung zwischen der Gabelschwinge und der Segmentplatte 25 gelöst, kann die Gabel sich um den Gelenkpunkt 7 drehen, wobei dann durch das Zusammenwirken des oben erläuterten Gelenkvierecks ein Öffnen des Greifers 11 dadurch erfolgt, daß die eigentlichen Gabelzinken 2 nach unten wegkippen, so daß dadurch beispielsweise das aufgenommene Silagegut in ein landwirtschaftliches Transportfahrzeug abgeladen werden kann.

Die Ausbildung der Lenker 5 und 6 ist, wie dies deutlich die Fig. 2 zeigt, so, daß selbst in der abgesenktesten Stellung der Tragarme 1o die Verbindungsbereiche zwischen Tragarme 1o und Lenker 5, 6 nicht
über die horizontale Ebene nach unten hin vorsteht,
die die Unterkante der Gabelzinken 2 definiert.

Patentansprüche:

1. Siloentnahmegerät für landwirtschaftliche Betriebe mit einer von Tragarmen einer von einem landwirtschaftlichen Zugfahrzeug getragenen Hubeinrichtung schwenkbar getragenen Gabel und einem um ein Schwenklager schwenkbaren Greifer, der mit der Gabel zusammenwirkt, dadurch gekennzeichnet, daß die Gabel (1) an die Tragarme (1o) der Hubeinrichtung unter Zwischenschaltung von beiderendig schwenkbar gelagerten Lenkern (5, 6) anschließt, der Greifer (11) nach rückwärts über das Schwenklager (12) hinaus (bei 14) verlängert ist und das verlängerte Ende (14) über Verbindungshebel (18, 19) mit den hubeinrichtungsseitigen Enden der Lenker (5, 6) schwenkbar verbunden ist.

2. Siloentnahmegerät nach Anspruch 1, gekennzeichnet durch einen die Schwenkbewegung des Greifers (11) um das Schwenklager (12) blockierenden Riegelhaken (2oo).

3. Siloentnahmegerät nach Anspruch 1 und 2, dadurch gekennzeichnet, daß ein an sich bekanntes, die Einstellung der Neigung der Gabel (1) ermöglichendes Lochsegment (25) an dem oder den Verbindungshebeln (18, 19) angeordnet ist.

4. Siloentnahmegerät nach einem oder mehreren der vorhergehenden Ansprüche, dadurch gekennzeichnet, daß zwei Verbindungshebel (18, 19) vorgesehen sind, die dreieckförmig von den im Abstand voneinander angeordneten Lenkern (5, 6) zum verlängerten Ende (14) des Greifers (11) führen.

5. Siloentnahmegerät nach Anspruch 1 bis 4, dadurch gekennzeichnet, daß der Greifer (11) als Greifergabel mit einzelnen Greiferzinken (155) ausgebildet ist, wobei die Greiferbreite der Breite der Gabel (1) entspricht.

6. Siloentnahmegerät nach Anspruch 2, gekennzeichnet durch eine den Riegelhaken (2oo) in die Riegelstellung führende Feder (21).

7. Siloentnahmegerät nach einem oder mehreren der vorhergehenden Ansprüche, dadurch gekennzeichnet, daß die Gabel (1) mit Seitenwandzinken (233) ausgerüstet ist.

8. Siloentnahmegerät nach einem oder mehreren der vorhergehenden Ansprüche, dadurch gekennzeichnet, daß die Gabelzinken (2) und die Greiferzinken (155) relativ breit ausgebildet sind.

9. Siloentnahmegerät wenigstens nach Anspruch 1, dadurch gekennzeichnet, daß die Verbindung zwischen den Lenkern (5, 6) und den Tragarmen (1o) derart verstarrt ist, daß Schwenkbewegungen der Lenker (5, 6) nach unten in der angehobenen Stellung der Tragarme (1o) verhindert sind.

1o. Siloentnahmegerät wenigstens nach Anspruch 1, gekennzeichnet durch eine kniegelenkartige Ausbildung der Verbindung zwischen Tragarme (1o) und Lenker (5, 6).

11. Siloentnahmegerät nach Anspruch 9, gekennzeichnet durch einen oder je einen vom Lenker (5, 6) getragenen Anschlag (26), der bei einer Schwenkbewegung zwischen den Lenkern (5, 6) und den Tragarmen (1o) in den Schwenk-

weg der Tragarme (1o) vorsteht.

12. Siloentnahmegerät nach Anspruch 1, dadurch gekennzeichnet, daß die Greiferzinken (155) im wesentlichen geradlinig ausgebildet sind.

13. Siloentnahmegerät nach einem oder mehreren der vorhergehenden Ansprüche, dadurch gekennzeichnet, daß die Greiferzinken (155) etwa einen rechten Winkel mit der horizontalen Ebene einschließen, die durch den Gabelstiel (17) verläuft.

14. Siloentnahmegerät nach einem oder mehreren der vorhergehenden Ansprüche, dadurch gekennzeichnet, daß die unterste Kante der Gelenkverbindung zwischen den Tragarmen (1o) und den Lenkern (5, 6) in der Stellung, in der die Gabelzinken (2) horizontal ausgerichtet sind und die Greiferzinken (155) geöffnet sind, nicht über die Ebene der Unterkante der Gabelzinken (2) vorsteht.

15. Siloentnahmegerät nach Anspruch 14, dadurch gekennzeichnet, daß die Lenker (5, 6) nach oben abgewinkelt ausgebildet sind.

16.     Siloentnahmegerät nach einem oder mehreren der vorhergehenden Ansprüche, gekenn - zeichnet durch einen vom Gabelstiel (17) getragenen Widerlagerrahmen (27), der an die Oberkante der Greiferzinken anschließt.

Fig. 1

1/3

0033866

0033866

Fig. 3

11

18

10

25

26

9

7

1

Fig. 2

11

25

18

9

26

10

7

1

Fig. 4